Europäisches Patentamt

European Patent Office

Office européen des brevets

(19)

(11) EP 0 426 446 B1

(12) EUROPEAN PATENT SPECIFICATION

(45) Date of publication and mention
of the grant of the patent:
**19.09.2001 Bulletin 2001/38**

(51) Int Cl.[7]: **C08K 13/04**
// (C08K13/04, 7:00, 3:00, 5:00)

(21) Application number: **90311915.4**

(22) Date of filing: **31.10.1990**

(54) **Resin composition having bright texture**

Harzzusammensetzung mit hellem Aussehen

Composition de résine ayant une texture brillante

(84) Designated Contracting States:
**DE FR GB NL**

(30) Priority: **01.11.1989 JP 28646089**

(43) Date of publication of application:
**08.05.1991 Bulletin 1991/19**

(73) Proprietors:
 • **Toda Kogyo Corporation
  Hiroshima-shi, Hiroshima-ken (JP)**
 • **DAINICHISEIKA COLOR
  & CHEMICALS MFG. CO. LTD.
  Chuo-ku Tokyo 103 (JP)**

(72) Inventors:
 • **Suzuki, Shigeomi
  Kawaguchi-shi, Saitama-ken (JP)**
 • **Iizuka, Toshio
  Arakawa-ku, Tokyo (JP)**
 • **Katamoto, Tsutomu
  Hiroshima-shi, Hiroshima-ken (JP)**
 • **Toda, Tetsuro
  Hiroshima-shi, Hiroshima-ken (JP)**

(74) Representative: **Woods, Geoffrey Corlett et al
J.A. KEMP & CO.
Gray's Inn
14 South Square
London WC1R 5JJ (GB)**

(56) References cited:
 **EP-A- 0 180 881          AT-B- 385 511**

 • **Database WPI, DERWENT PUBLICATIONS LTD,
  London, GB && JP-A-50 143827 (KANSAI PAINT
  KK) 19.11.1975**
 • **PATENT ABSTRACTS OF JAPAN vol. 7, no. 191
  (C-182)(1336) 20 August 1983, & JP-A-58 91772
  (DAIKIN KOGYO KK) 31 May 1983,**

**Description**

The present invention relates to a resin composition having a bright metallic texture.

For a conventional resin having a metallic texture (metallic resin), a metal powder, such as aluminum, or mica is used in order to impart a bright texture thereto. Such metal powder and mica are used together with a coloring dye or pigment.

As the above metallic resins, resins containing aluminum powder or mica and an ordinary iron oxide as a pigment are usable. However, a molded product having a characteristic bright texture cannot be produced from the resin, because it does not show a phenomenon of light interference.

Molded products of such metallic resins have a durability almost sufficient for meeting market demand, but the aesthetic appearance is not satisfactory in the respect of a soft and bright texture.

AT-B-385511 discloses a shaped article having a glitter effect comprising micaceous iron ore platelets embedded in a transparent polymer matrix, the amount of micaceous iron ore being more than 5% by weight based on the polymer.

As a result of the studies undertaken by the present inventors so as to eliminate the defects in the prior art, it has been found that plate-like iron oxide particles having an average particle diameter of 0.5 to 5.0 μm, a lamellar thickness of 5 to 50 nm (50 to 500Å) and a plate ratio of 50:1 to 500:1 show a phenomenon of light interference and that by mixing the plate-like iron oxide particles with at least one pigment selected from a coloring pigment, a mica pigment and a metal powder pigment, and a thermoplastic resin and extrusion-molding or injection-molding the resultant mixture, the obtained molded-product shows a soft and bright texture which is different from the texture produced by a conventional molded product in which only a metal powder pigment or a mica pigment is used. On the basis of this finding, the present invention has been accomplished.

In one aspect of the present invention, there is provided a resin composition for molding comprising a mixture of:

- a thermoplastic resin;
- plate-like haematite particles having an average particle diameter of 0.5 to 5.0 μm, a lamellar thickness of 5 to 50 nm (50 to 500 Å) and a plate ratio of 50:1 to 500:1; and
- at least one pigment selected from a quinacridone pigment, a perylene pigment, a copper phthalocyanine pigment, an anthraquinone pigment, a metal complex pigment, a transparent iron oxide pigment, a polyazo pigment, an aluminium powder pigment, a stainless steel powder pigment, a copper powder pigment, transparent pearl mica, colored mica or interfered mica

wherein: (a) the total amount of the plate-like haematite particles in the composition is from 0.1 to 5.0 parts by weight per 100 parts by weight of the thermoplastic resin and is from 0.1 to 5.0 parts by weight per 100 parts by weight of the said resin composition; and (b) the total amount of the or each pigment in the composition is from 0.1 to 5.0 parts by weight, per 100 parts by weight of the resin composition.

The plate-like haematite particles used in the present invention are described in EP-A-0306224.

Plate-like haematite particles used in the present invention can be obtained by autoclaving an alkaline suspension of iron (III) oxyhydroxide particles. $\underline{FeO_x \cdot Fe_2O_3}$ ($0 \leq x \leq 1$) particles or a ferric salt, the alkaline suspension having pH of not less than 9, and containing 0.1 to 15.0 mol of water-soluble salt based on 1 mol of Fe and 1.5 to 20.0 mol% of a Si-containing compound expressed as Si, based on the total amount of Fe in the alkaline suspension.

The iron (III) oxyhydroxide particles may have any particle form, such as an acicular form and a spindle form, that is obtained by a conventional reaction method. It is possible to use a wet-cake obtained by washing a reaction mother liquor containing iron (III) oxyhydroxide with water, a dried wet-cake thereof or the reaction mother liquid.

Examples of $\underline{FeO_x \cdot Fe_2O_3}$ ($0 \leq x \leq 1$) particles which are usable are a wet-cake obtained by washing with water a reaction mother liquor containing granular or cubic magnetite particles obtained by the reaction of ferrous salt and an aqueous alkaline solution, a dried wet-cake thereof or the reaction mother liquid, and acicular or spindle $\underline{Fe-O_x \cdot Fe_2O_3}$ ($0 \leq x \leq 1$) particles obtained by reducing or further oxidizing, if necessary, the above-mentioned acicular of spindle iron (III) oxyhydroxide particles.

As the ferric salt, ferric chloride, ferric sulfide, ferric nitrate, etc. are usable.

The pH of the alkaline suspension is not less than 9, preferably not less than 12. If the pH is less than 9, acicular iron (III) oxyhydroxide particles or $\underline{FeO_x \cdot Fe_2O_3}$ ($0 \leqq x \leqq 1$) particles are disadvantageously mixed into the plate-like hematite particles.

The autoclaving method is carried out by using an autoclave at a temperature of ordinarily 150 to 330°C, preferably 200 to 300°C, more preferably 250 to 300°C for 2 to 6 hours. It is a general tendency that the higher the alkali concentration is, the lower is the reaction temperature for producing plate-like hematite particles. If the temperature is lower than 150°C, the suspension contains iron (III) oxyhydroxide, $\underline{FeO_x \cdot Fe_2O_3}$ ($0 \leqq x \leqq 1$) or a ferric salt as it is, thereby producing no plate-like hematite particles. If the temperature is higher than 330°C, the production of plate-like hematite particles is possible, but when the safety of the autoclave is taken into consideration, the upper limit of the temperature is 330°C.

A water-soluble salt used in the present invention may be exemplified by sulfates, nitrates, chlorides and acetates of alkaline metals.

The amount of the water-soluble salt added is 0.1 to 15.0 mol, preferably 0.5 to 10.0 mol, more preferably 3.0 to 5.0 mol based on 1 mol of Fe. By the synergistic effect due to the the coexistence of the water-soluble salt and the Si-containing compound, plate-like hematite particles having very thin thickness, in particular, a thickness of 5 to 50 nm (50 to 500 Å) and a relatively large plate ratio, in particular a plate ratio of 50:1 to 500:1 can be obtained.

If less than 0.1 mol of the water-soluble salt is added, the thickness and plate ratio of the plate-like hematite particles produced becomes unfavorable. In particular, since the thickness of the plate-like hematite particles becomes more than 50nm (500 Å), the plate ratio of the plate-like hematite particles becomes less than 50:1 and the hue of the particles becomes low, it is difficult to obtain the target plate-like hematite particles used in the present invention. If more than 15 mol of the water-soluble salt is added, it is possible to obtain the target plate-like hematite particles used in the present invention, but the excessive addition of water-soluble salt is pointless.

Examples of the Si-containing compound used in the present invention are the silicates of potassium and sodium, and colloidal silica.

The Si-containing compound is added so that the amount in the alkaline suspension based on the total amount of Fe is 1.5 to 20.0 mol%, preferably 5.0 to 15.0 mol%, expressed as Si. If the amount of the Si-containing compound added is less than 1.5 mol%, expressed as Si, based on the total amount of Fe, the thickness of the plate-like hematite particles becomes more than 50 nm (500Å) and, hence, the plate ratio becomes small, so that the plate-like haematite particles take on a colour from red-purple to black purple. On the other hand, if it is more than 20 mol%, expressed as Si, based on the total amount of Fe, the thickness of the plate-like haematite particles becomes smaller than 5 nm (50Å) due to the synergistic effect of the water-soluble salt and the Si-containing compound and, as a result, the phenomenon of the destruction of the particle form occurs.

The water-soluble salt and the Si-containing compound used in the present invention exert an influence on the particle form (for example, the plate ratio and the thickness) and the surface property of the plate-like haematite particles produced. It is therefore necessary to add the water-soluble salt and the Si-containing compound before the reaction of producing the plate-like haematite particles.

The water-soluble salt may be added before, simultaneously with, or after the addition of the Si-containing compound.

The average particle diameter and the plate ratio of the plate-like haematite particles tend to be increased in proportion to the amount of water-soluble salt added.

The content of the plate-like haematite particles is from 0.1 to 5.0 parts by weight, preferably 0.3 to 2.0 parts by weight per 100 parts by weight of the resin composition of the present invention. Further, the amount of the plate-like haematite particles is 0.1 to 5.0 parts by weight, preferably 0.3 to 2.0 parts by weight per 100 parts by weight of the thermoplastic resin used in the present invention.

If the content of the plate-like haematite particles in 100 parts by weight of the resin composition is less than 0.1 part by weight, it is difficult to get a sufficient bright texture, while the use of more than 5 parts by weight of plate-like haematite particles tends to lower the physical properties of the molded products.

As a pigment used in the present invention, a colouring pigment, a metal powder pigment and a mica pigment are usable. The content of the pigment used in the present invention is 0.1 to 5.0 parts by weight, preferably 0.1 to 3.0 parts by weight per 100 parts by weight of the resin composition of the present invention. The amount of the pigment is preferably from 3 to 1000 parts by weight, more preferably 3 to 700 parts by weight based on 100 parts by weight of the plate-like haematite particles.

If the content of the pigment in 100 parts by weight of the resin composition is less than 0.1 part by weight, the bright texture tends to have an insufficiently aesthetic appearance while if it exceeds 5 parts by weight, the bright texture tends to be impaired.

The colouring pigment used in the present invention is a coloured pigment which can be ordinarily used for colouring a resin, and it may be used in the form of a mixture of two kinds or more. It is selected from a quinacridone pigment, a perylene pigment, a copper phthalocyanine pigment, an anthraquinone pigment, a metal complex pigment, a transparent iron oxide pigment and a polyazo pigment. The content of the coloring pigment in 100 parts by weight of the resin composition is 0.1 to 5 parts by weight, preferably 0.1 to 3.0 parts by weight.

The metal powder pigment in the present invention is selected from an aluminum powder pigment, stainless steel powder pigment, copper powder pigment and a mixture thereof. Among these, the aluminum powder pigment is most widely used. The content of the metal powder pigment in 100 parts by weight of the resin composition is 0.1 to 5 parts by weight, preferably 0.1 to 3.0 parts by weight.

The mica pigment used in the present invention is selected from, transparent pearl mica, colored mica, interfered mica and mixtures thereof. By using a combination of several kinds of colored micas having different tones, it is possible to produce a colored molded product having an elaborately designed tone. The content of the mica pigment in 100 parts by weight of the resin composition is 0.1 to 5 parts by weight, preferably 0.1 to 3.0 parts by weight.

The thermoplastic resin used in the present invention is not restricted. Examples of such thermoplastic resins are polyethylene, polypropylene, polybutene-1, polystyrene, polyvinyl chloride, vinyl chloride-vinyl acetate copolymer, polymethyl methacrylate, acryl-styrene copolymer, ethylene-vinyl acetate copolymer, acrylonitrilebutadiene copolymer, thermoplastic polyurethane, polyamide, polycaproamide, and thermoplastic polyester.

The content of the thermoplastic resin in 100 parts by weight of the resin composition is typically from 90.0 to 99.8 parts by weight, preferably 95.0 to 99.6 parts by weight.

A filler, an antistatic agent, a stabilizer, an antioxidant, an ultraviolet absorber, or an other pigment may, for example, be added to the resin composition of the present invention, if necessary, providing the effect of the present invention is obtained.

The resin composition according to the present invention is produced as follows. A blend of a metallic soap, a synthesized wax or the like and plate-like iron oxide particles is mixed by a mixer such as a Henschel mixer (produced by Mitsui, Miike Machinery Company, Ltd.). To this mixture is mixed a blend of a pigment and a metallic soap, a synthesized wax or the like which is prepared separately from the former blend. The resultant mixture is processed so as to be easy to disperse, thereby obtaining a coloring agent. The thus-obtained coloring agent is mixed with a thermoplastic resin by a mixer such as a tumbler and a ribbon blender, to give a resin composition.

Alternatively, a metallic soap, a synthesized wax or the like is mixed with plate-like iron oxide particles and a pigment, and the thus-obtained blend is mixed by a mixer and processed so as to be easy to disperse, thereby obtaining a coloring agent. The thus-obtained coloring agent is mixed with a thermoplastic resin by a mixer such as a tumbler and a ribbon blender, to give a resin composition.

Furthermore, it is possible to prepare a master batch by kneading plate-like haematite particles and/or a pigment directly with a thermoplastic resin at a high concentration, to add the master batch to the thermoplastic resin, and to mix the mixture by a mixer thereby obtaining a resin composition.

The resin composition is molded by a molding machine to obtain a molded product.

The molded product obtained from the resin composition of the present invention has an excellent metallic aesthetic appearance, namely, a soft and bright texture and a high durability.

The present invention is more precisely explained while referring to Examples as follows.

"Part" and "%" in the Examples and Comparative Examples mean "part by weight" and "% by weight", respectively.

The average particle diameter, the thickness and the plate ratio were determined according to the methods described in European Patent Application No. EP-A-306224.

PRODUCTION EXAMPLE 1

An alkaline suspension of pH 13.8 which was obtained by mixing 0.2 mol of $\alpha$-FeOOH (major axis: 1.0 $\mu$m, BET specific surface area 50.2 $m^2$/g), 0.6 mol of $NaNO_3$ (equivalent to 3 mol on the basis of 1 mol of Fe), 4.21g of water-glass No. 3 ($SiO_2$: 28.55 wt%, equivalent to 10 mol% of Si on the basis of the total amount of Fe) and 1.0 mol of NaOH was heated to 280°C in an autoclave. This temperature was maintained for 2 hours while mechanically stirring the suspension, thereby producing a yellowish brown precipitate.

After the mixture was cooled to room temperature, the yellowish brown precipitate was filtered out. The precipitate was thoroughly washed with water and then dried.

The obtained particles proved to be hematite particles from the X-ray diffraction pattern. The average particle diameter was 2.5 $\mu$m. The thickness was 24nm (240 Å) and the plate ratio was 104 : 1.

PRODUCTION EXAMPLE 2

An alkaline suspension of pH 13.8 which was obtained by mixing 0.2 mol of $\alpha$-FeOOH (major axis: 1.0 $\mu$m, BET specific surface area 50.2 $m^2$/g), 0.8 mol of $NaNO_3$ (equivalent to 4 mol on the basis of 1 mol of Fe), 3.37g of water-glass No. 3 ($SiO_2$: 28.55 wt%, equivalent to 8 mol% of Si on the basis of the total amount of Fe) and 1.0 mol of NaOH was heated to 280°C in an autoclave. This temperature was maintained for 2 house while mechanically stirring the suspension, thereby producing a yellowish brown precipitate.

After the mixture was cooled to room temperature, the yellowish brown precipitate was filtered out. The precipitate was thoroughly washed with water and then dried.

The obtained particles proved to be hematite particles from the X-ray diffraction pattern. The average particle diameter was 2.4 $\mu$m. The thickness was 35nm (350 Å) and the plate ratio was 69 : 1.

Example 1

| (Mixture A) | |
| --- | --- |
| Plate-like hematite particles [obtained in PRODUCTION EXAMPLE 1 (plate ratio: 104 : 1. average particle diameter: 2.5 μm, lamellar thickness : 24nm (240 Å)] | 80 parts |
| Zinc stearate | 20 parts |
| (Mixture B) | |
| Quinacridone pigment | 60 parts |
| Zinc stearate | 40 parts |

Mixtures A and B were respectively uniformly mixed by a mixer (Henschel mixer: trade name, produced by Mitsui, Miike Machinery Company, Ltd.).

One point two (1.2) parts of Mixture A and 0.3 part of Mixture B and 100 parts of a methyl methacrylate resin (Sumipex MHO: trade name, produced by Sumiitomo Chemical Co., Ltd.) were mixed by a tumbler (tumbling mixer). The mixture was then molded by a 40-mm extrusion molding machine to obtain colored pellets. The colored pellets were molded by a 1-oz injection molding machine, thereby obtaining a molded plate having a bright texture on the surface.

Example 2

| (Mixture C) | |
| --- | --- |
| Plate-like hematite particles [obtained in PRODUCTION EXAMPLE 2 (plate ratio: 69 : 1, average particle diameter: 2.4 μm, lamellar thickness: 35nm (350 Å)] | 80 parts |
| Zinc stearate | 20 parts |
| (Mixture D) | |
| Copper phthalocyanine blue | 60 parts |
| Zinc stearate | 40 parts |

Mixtures C and D were respectively uniformly mixed by a mixer (Henschel mixer: trade name, produced by Mitsui, Miike Machinery Company, Ltd.).

One point five (1.5) parts of Mixture C and 0.3 part of Mixture D and 100 parts of a polyethylene resin (Novatec JV070H: trade name, produced by Mitsubishi Kasei. Corporation) were mixed by a tumbler. The mixture was then molded by a 40-mm extrusion molding machine to obtain colored pellets. The colored pellets were molded by a 28g (1-oz) injection molding machine, thereby obtaining a molded plate having a bright texture on the surface.

Example 3

| (Mixture E) | |
| --- | --- |
| Mica pigment (Marine Pearl White: trade name, produced by Male Co., Ltd). | 80 parts |
| Zinc stearate | 20 parts |

After Mixture E was uniformly mixed by a Henschel mixer, 1 part of Mixture E and 1 part of Mixture A in Example 1 and 100 parts of a polystyrene resin (Styron 666: trade name, produced by Asahi Chemical Industry Co., Ltd.) were mixed by a tumbler. The mixture was then molded by a 1-oz injection molding machine, thereby obtaining a molded plate having a bright texture on the surface.

Example 4

| (Mixture F) | |
|---|---|
| Plate-like hematite particles [obtained in PRODUCTION EXAMPLE 1 (plate ratio: 104 : 1, average particle diameter: 2.5 μm, lamellar thickness : 24nm (240 Å)] | 63 parts |
| Stainless flake pigment (SP7700: trade name, produced by Kawatetsu Technoresearch) | 12 parts |
| Zinc stearate | 25 parts |

After Mixture F was uniformly mixed by a Henschel mixer, 2 parts of Mixture F and 100 parts of a polypropylene resin (Mitsubishi Polypro MH-4: trade name, produced by Mitsubishi Petrochemical Co. LTD.) were mixed by a tumbler. The mixture was then molded by a 40-mm extrusion molding machine to obtain colored pellets.

The colored pellets were molded by a 1-oz injection molding machine, thereby obtaining a molded plate having a bright texture on the surface.

Example 5

| (Mixture G) | |
|---|---|
| Plate-like hematite particles [obtained in PRODUCTION EXAMPLE 2 (plate ratio: 69 : 1, average particle diameter: 2.4 μm, lamellar thickness: 35nm (350 Å)] | 50 parts |
| Quinacridone pigment | 10 parts |
| Vinyl chloride resin ($\bar{P}$ = 1000) | 20 parts |
| Plasticizer (DOP) | 17 parts |
| Stabilizer (Ba - Zn) | 3 parts |

After Mixture G was uniformly mixed by a Henschel mixer, it was kneaded by a twin-rol mill at 130°C for 5 minutes, thereby obtaining a plate-like blend.

Three (3) parts of Mixture G and 100 parts of a vinyl chloride compound were kneaded by a Banbury mixer at 160°C for a minutes. The mixture was then calendered to obtain a film having a bright texture on the surface.

Example 6

One point five (1.5) parts of Mixture A in Example 1, 0.4 part of Mixture B in Example 1, 0.1 part of Mixture E in Example 3 and 100 parts of a methyl methacrylate resin (Sumipex MHO: trade name, produced by Sumitomo Chemical Co., Ltd.) were mixed by a tumbler. The mixture was then molded by a 40-mm extrusion molding machine to obtain colored pellets. The colored pellets were molded by a 28g (1-oz) injection molding machine, thereby obtaining a molded plate having a bright texture on the surface.

Example 7

Zero point two (0.2) part of Mixture B in Example 1, 0.3 part of Mixture D in Exmaple 2, 1.5 parts of Mixture F in Example 4 and 100 parts of a polystyrene resin (Styron 666: trade name, produced by Asahi Chemical Industry Co., Ltd.) were mixed by a tumbler. The mixture was then molded by a 28g (1-oz) injection molding machine, thereby obtaining a molded plate having bright texture on the surface.

Comparative Example 1

| (Mixture H) | |
|---|---|
| Granular hematite particles (average particle diameter: 0.2 μm) | 80 parts |
| Zinc stearate | 20 parts |

Mixture H was uniformly mixed by a Henschel mixer. 1.5 parts of Mixture H, 0.5 part of Mixture B in Example 1 and 100 parts of a methyl methacrylate resin (Sumipex MHO: trade name, produced by Sumitomo Chemical Co., Ltd.) were mixed by a tumbler. The mixture was then molded by a 40-mm extrusion molding machine to obtain colored pellets. The colored pellets were molded by a 28g (1-oz) injection molding machine, thereby obtaining a colored molded plate.

Comparative Example 2

| (Mixture I) | |
|---|---|
| Spindle-shaped hematite particles (major axial diameter: 0.07 µm, aspect ratio (major axial diameter: minor axial diameter): 5 : 1) | 80 parts |
| Zinc stearate | 20 parts |

After Mixture I was uniformly mixed by a Henschel mixer, 1.0 part of Mixture I, 1.0 part of Mixture E in Example 3 and 100 parts of a polypropylene resin (Mitsubishi Polypro MH-4: trade name, produced by Mitsubishi Petrochemical Co., LTD.) were mixed by a tumbler. The mixture was then molded by a 40-mm extrusion molding machine to obtain colored pellets. The colored pellets were molded by a 28g (1-oz) injection molding machine, thereby obtaining a colored molded plate.

Comparative Example 3

| (Mixture J) | |
|---|---|
| Plate-like hematite particles (average particle diameter: 0.2 µm) | 45 parts |
| Mica pigment (Marine Pearl White: trade name, produced by Male Co. Ltd.) | 5 parts |
| Polyazo pigment (Chromophthal Scarlet R: trade name, produced by Ciba-Geigy) | 10 parts |
| Vinyl chloride resin ($\bar{P}$ = 1000) | 20 parts |
| Plasticizer (DOP) | 17 parts |
| Stabilizer (Ba - Zn) | 3 parts |

After Mixture J was uniformly mixed by a Henschel mixer, it was kneaded by a twin-roll mill 130°C for 3 minutes, thereby obtaining a plate-like blend.
Three (3) parts of Mixture J and 100 parts of a vinyl chloride compound were kneaded by a Banbury mixer at 160°C for 3 minutes. The mixture was then calendered to obtain a colored film.

Comparative Example 4

| (Mixture K) | |
|---|---|
| Spindle-shaped hematite particles (major axial diameter: 0.07 µm, aspect ratio (major axial diameter: minor axial diameter: 5 : 1) | 63 parts |
| Stainless flake pigment (SP7700: trade name, produced by Kawatetsu Technoresearch). | 12 parts |
| Zinc stearate | 25 parts |

After Mixture K was uniformly mixed by a Henschel mixer, 2 parts of Mixture K and 100 parts of a polypropylene resin (Mitsubishi Polypro MH-4: trade name, produced by Mitsubishi Petrochemical Co., LTD.) were mixed by a tumbler. The mixture was then molded by a 40-mm extrusion molding machine to obtain colored pellets.
The colored pellets were molded by a 28g (1-oz) injection molding machine, thereby obtaining a colored molded plate.

Comparative Example 5

One point five (1.5) parts of Mixtures K in Comparative Example 4, 0.2 part of Mixture B in Example 1, 0.3 part of Mixture E in Example 3 and 100 parts of a polystyrene resin (Styron 666: trade name, produced by Asahi Chemical Industry Co., Ltd.) were mixed by a tumbler. The mixture was then molded by a 28g (1-oz) injection molding machine, thereby obtaining a colored molded plate.

The properties of the molded products in Examples and Comaparative Examples are shown in Table 1.

Table 1

|  | Bright texture | Directional property | Soft texture | $L*_{45}/L*_{-45}$ |
|---|---|---|---|---|
| Example 1 | 3 | 4 | 5 | 2.95 |
| Example 2 | 3 | 4 | 5 | 3.20 |
| Example 3 | 3 | 4 | 5 | 2.80 |
| Example 4 | 3 | 4 | 4 | 3.34 |
| Example 5 | 3 | 4 | 5 | 3.42 |
| Example 6 | 3 | 4 | 5 | 3.73 |
| Example 7 | 3 | 4 | 4 | 4.25 |
| Comparative example 1 | 1 | 1 | 1 | 1.04 |
| Comparative example 2 | 2 | 2 | 2 | 1.55 |
| Comparative example 3 | 1 | 1 | 1 | 1.26 |
| Comparative example 4 | 2 | 2 | 1 | 1.72 |
| Comparative example 5 | 2 | 2 | 1 | 1.78 |

Each aesthetic appearance was evaluated in five stages ranging from 5 meaning best to 1 meaning worst.

$L^*_{45}/L^*_{-45}$ is the ratio of the lightness of acceptance angles +45° and -45° at which the incidence light is -70°. In this case, the vertical line to the paint film surface is regarded as 0°. This $L^*_{45}/L^*_{-45}$ value shows the difference of lightness when the paint film is projected to the light at a different angle, so called the down-flop effect. The measurement was made by a gonio-photometer color measurement system GCMS-3 sold by Murakami Color Research. The larger value of $L^*_{45}/L^*_{-45}$ the more the effect of down-flop, and in the case of $L^*_{45}/L^*_{-45}$ = 1, the down-flop effect becomes negligible. It is typically necessary for the purpose of the present invention that $L^*_{45}/L^*_{-45} \geqq 2.0$, preferably $L^*_{45}/L^*_{-45} \geqq 2.6$.

The bright texture is expressed by a sensory value in proportion to the quantity of reflected light at positive angle to incident light, in other words, what is called a glittering appearance. It is typically necessary for the purpose of the present invention that the evaluation of the bright texture is not less than 3.

The directional property means the difference of color tone between the reflected light at positive angle and negative angle, when the incident light comes at a certain negative angle, in other words, it is called the "flip-flop" effect. It is typically necessary for the purpose of the present invention that the evaluation of the directional property is not less than 3.

The soft texture is the sensory value which is related to the distribution of positive reflected light. The softer the texture is, the wider is the half width of the distribution of positive reflected light. This is the sensory value of the denseness of what is called a glittering appearance. It is typically necessary for the purpose of the present invention that the evaluation of the soft texture is not less than 3.

The amounts (parts) of the compounding materials of Examples and Comparative Examples are tabulated as follows (Table 2).

Table 2

| | Iron oxide particles | Pigment | | | | Resin |
|---|---|---|---|---|---|---|
| | | Total | Coloring pigment | Metal powder pigment | Mica pigment | |
| Example 1 | 0.96 | 0.18 | 0.18 | - | - | 100 |
| Example 2 | 1.2 | 0.18 | 0.18 | - | - | 100 |
| Example 3 | 0.80 | 0.80 | - | - | 0.80 | 100 |
| Example 4 | 1.26 | 0.24 | 0.24 | - | - | 100 |
| Example 5 | 1.5 | 0.30 | 0.30 | - | - | 100 |
| Example 6 | 1.2 | 0.32 | 0.24 | - | 0.08 | 100 |
| Example 7 | 0.945 | 0.48 | 0.30 | 0.18 | - | 100 |
| Comparative example 1 | 1.2 | 0.30 | 0.30 | - | - | 100 |
| Comparative example 2 | 0.80 | 0.80 | - | - | 0.80 | 100 |
| Comparative example 3 | 1.35 | 0.45 | 0.30 | - | 0.15 | 100 |
| Comparative example 4 | 1.26 | 0.24 | - | 0.24 | - | 100 |
| Comparative example 5 | 0.945 | 0.54 | 0.12 | 0.18 | 0.24 | 100 |

**Claims**

1. A resin composition for molding comprising a mixture of:

   - a thermoplastic resin;
   - plate-like haematite particles having an average particle diameter of 0.5 to 5.0 μm, a lamellar thickness of 5 to 50 nm (50 to 500 Å) and a plate ratio of 50:1 to 500:1; and
   - at least one pigment selected from a quinacridone pigment, a perylene pigment, a copper phthalocyanine pigment, an anthraquinone pigment, a metal complex pigment, a transparent iron oxide pigment, a polyazo pigment, an aluminium powder pigment, a stainless steel powder pigment, a copper powder pigment, transparent pearl mica, colored mica or interfered mica

   wherein: (a) the total amount of the plate-like haematite particles in the composition is from 0.1 to 5.0 parts by weight per 100 parts by weight of the thermoplastic resin and is from 0.1 to 5.0 parts by weight per 100 parts by weight of the said resin composition; and (b) the total amount of the or each pigment in the composition is from 0.1 to 5.0 parts by weight, per 100 parts by weight of the resin composition.

2. A resin composition according to claim 1 which contains from 0.1 to 3.0 parts by weight of said pigment per 100 parts by weight of said resin composition.

3. A resin composition according to claim 1 or 2, which contains from 90.0 to 99.8 parts by weight of said thermoplastic resin per 100 parts by weight of said resin composition.

4. A resin composition according to any one of the preceding claims, which contains from 0.3 to 2.0 parts by weight of said plate-like haematite particles per 100 parts by weight of said thermoplastic resin.

5. A resin composition according to any one of the preceding claims, which contains from 3 to 1000 parts by weight of said pigment per 100 parts by weight of said plate-like haematite particles.

6. A resin composition according to any one of the preceding claims, wherein the thermoplastic resin is selected from polyethylene, polypropylene, polybutene-1, polystyrene, polyvinyl chloride, a vinyl chloride-vinyl acetate copolymer, polymethyl methacrylate, an acryl-styrene copolymer, an ethylene-vinyl acetate copolymer, an acrylonitrilebutadiene copolymer, a thermoplastic polyurethane, polyamide, polycaproamide and a thermoplastic polyester.

7. Molded articles prepared from a resin composition as claimed in any one of the preceding claims.

**Patentansprüche**

1. Harzzusammensetzung zum Formen, umfassend eine Mischung aus:

   - einem thermoplastischen Harz;

   - plättchenartigen Hämatitteilchen mit einem durchschnittlichen Teilchendurchmesser von 0,5 bis 5,0 µm, einer lamellaren Dicke von 5 bis 50 nm (50 bis 500 Å) und einem Plättchenverhältnis von 50:1 bis 500:1; und

   - wenigstens einem Pigment, ausgewählt aus einem Chinacridonpigment, einem Perylenpigment, einem Kupferphthalocyaninpigment, einem Anthrachinonpigment, einem Metallkomplexpigment, einem transparenten Eisenoxidpigment, einem Polyazopigment, einem Aluminiumpulverpigment, einem rostfreien Stahlpulverpigment, einem Kupferpulverpigment, einem transparenten Perlglimmer, gefärbtem Glimmer oder Interferenzglimmer,

   worin: (a) die Gesamtmenge der plättchenartigen Hämatitteilchen in der Zusammensetzung 0,1 bis 5,0 Gew.-Teile je 100 Gew.-Teile des thermoplastischen Harzes beträgt und 0,1 bis 5,0 Gew.-Teile je 100 Gew.-Teile der Harzzusammensetzung beträgt; und (b) die Gesamtmenge des oder jeden Pigments in der Zusammensetzung 0,1 bis 5,0 Gew.-Teile je 100 Gew.-Teile der Harzzusammensetzung beträgt.

2. Harzzusammensetzung gemäss Anspruch 1, die 0,1 bis 3,0 Gew.-Teile des Pigments je 100 Gew.-Teile der Harzzusammensetzung enthält.

3. Harzzusammensetzung gemäss Anspruch 1 oder 2, die 90,0 bis 99,8 Gew.-Teile des thermoplastischen Harzes je 100 Gew.-Teile der Harzzusammensetzung enthält.

4. Harzzusammensetzung gemäss einem der vorhergehenden Ansprüche, die 0,3 bis 2,0 Gew.-Teile der plättchenartigen Hämatitteilchen je 100 Gew.-Teile des thermoplastischen Harzes enthält.

5. Harzzusammensetzung gemäss einem der vorhergehenden Ansprüche, die 3 bis 1.000 Gew.-Teile des Pigments je 100 Gew.-Teile der plättchenartigen Hämatitteilchen enthält.

6. Harzzusammensetzung gemäss einem der vorhergehenden Ansprüche, worin das thermoplastische Harz ausgewählt ist aus Polyethylen, Polypropylen, Polybuten-1, Polystyrol, Polyvinylchlorid, einem Vinylchlorid-Vinylacetat-Copolymer, Polymethylmethacrylat, einem Acryl-Styrol-Copolymer, einem Ethylen-Vinylacetat-Copolymer, einem Acrylnitril-Butadien-Copolymer, einem thermoplastischen Polyurethan, Polyamid, Polycaproamid und einem thermoplastischen Polyester.

7. Formgegenstände, hergestellt aus einer Harzzusammensetzung gemäss einem der vorhergehenden Ansprüche.

**Revendications**

1. Composition résineuse à mouler, comprenant un mélange :

   - d'une résine thermoplastique ;
   - de particules d'hématite en paillettes ayant un diamètre particulaire moyen de 0,5 à 5,0 µm, une épaisseur de lamelle de 5 à 50 nm (de 50 à 500 Å) et un rapport de paillette de 50:1 à 500:1 ; et

- d'au moins un pigment choisi parmi un pigment de type quinacridone, un pigment de type pérylène, un pigment de type phtalocyanine cuivre, un pigment de type anthraquinone, un pigment de type complexe de métal, un pigment de type oxyde de fer transparent, un pigment polyazoïque, un pigment de type poudre d'aluminium, un pigment de type poudre d'acier inoxydable, un pigment de type poudre de cuivre, du mica transparent en perles, du mica coloré ou du mica à interférences, dans laquelle :

   (a) la quantité totale des particules d'hématite en paillettes dans la composition étant de 0,1 à 5,0 parties en poids pour 100 parties en poids de la résine thermoplastique, et de 0,1 à 5,0 parties en poids pour 100 parties en poids de ladite composition résineuse ; et (b) la quantité totale du ou de chaque pigment dans la composition est de 0,1 à 5,0 parties en poids pour 100 parties en poids de la composition résineuse.

2. Composition résineuse selon la revendication 1, contenant de 0,1 à 3,0 parties en poids dudit pigment pour 100 parties en poids de ladite composition résineuse.

3. Composition résineuse selon la revendication 1 ou 2, contenant de 90,0 à 99,8 parties en poids de ladite résine thermoplastique pour 100 parties en poids de ladite composition résineuse.

4. Composition résineuse selon l'une quelconque des revendications précédentes, contenant de 0,3 à 2,0 parties en poids desdites particules d'hématite en paillettes pour 100 parties en poids de ladite résine thermoplastique.

5. Composition résineuse selon l'une quelconque des revendications précédentes, contenant de 3 à 1 000 parties en poids dudit pigment pour 100 parties en poids desdites particules d'hématite en paillettes.

6. Composition résineuse selon l'une quelconque des revendications précédentes, dans laquelle la résine thermoplastique est choisie parmi le polyéthylène, le polypropylène, le polybutène-1, le polystyrène, le chlorure de polyvinyle, un copolymère de chlorure de vinyle et d'acétate de vinyle, le polyméthacrylate de méthyle, un copolymère acrylique de styrène, un copolymère d'éthylène et d'acétate de vinyle, un copolymère d'acrylonitrile et de butadiène, un polyuréthanne thermoplastique, un polyamide, le polycaproamide et un polyester thermoplastique.

7. Articles moulés préparés à partir d'une composition résineuse telle que revendiquée selon l'une quelconque des revendications précédentes.